# FASCICULE DE BREVET EUROPEEN

(11) **EP 2 823 076 B1**
(45) Date de publication et mention de la délivrance du brevet: **17.10.2018**
(21) Numéro de dépôt: 13708158.4
(22) Date de dépôt: 08.03.2013
(51) Int. Cl.: F16H 63/32, C22C 21/02, C22F 1/043

(54) **FOURCHETTE DE BOÎTE DE VITESSES DE VÉHICULE ET SON PROCÉDÉ DE FABRICATION, ET BOÎTE DE VITESSES LE COMPORTANT**
SCHALTGABEL EINES GETRIEBES EINES FAHRZEUGES, HERSTELLUNGSVERFAHREN DAFÜR UND GETRIEBE DAMIT
SHIFT FORK OF A VEHICLE GEARBOX, METHOD FOR PRODUCING SAME, AND GEARBOX COMPRISING SAME

(30) Priorité: 09.03.2012 FR 1252154
(43) Date de publication de la demande: 14.01.2015
(73) Titulaire: Bronze Alu, 27750 La Couture Boussey (FR)
(72) Inventeur: DOREMUS, Eric, F-80310 Belloy sur Somme (FR); JANVIER, Bruno, F-41230 Courmemin (FR)
(74) Mandataire: Lavoix
(86) Numéro de dépôt international: PCT/EP2013/054685
(87) Numéro de publication internationale: WO 2013/132048

(56) Documents cités:
- EP-A1- 1 491 795
- FR-A1- 2 633 074
- JP-A- 3 090 265
- JP-A- 56 102 546
- JP-A- 60 204 854
- JP-A- 60 218 447
- JP-A- 63 303 048
- US-A- 4 147 074
- US-A1- 2001 010 242

## Description

L'invention concerne les pièces pour l'industrie automobile, et plus particulièrement les fourchettes de boîtes de vitesses soumises à des contraintes de flexion, de contact glissant, d'usure et de matage.

Les fourchettes de boîtes de vitesses sont classiquement constituées par des pièces de fonderie en laiton à haute résistance (laiton HR) ou en alliage cupro-aluminium du type CuAl10Fe3 constitué d'environ 87% de Cuivre, 10% d'Aluminium, 3% de Fer, ou en fonte, ou en tôle d'acier. Elles peuvent être formées par injection sous pression, ou par fonderie par gravité dans des moules du type coquilles métalliques, ou par fonderie sable automatisée du type DISAMATIC, ou par assemblage soudé d'éléments en tôle d'acier.

Ces fourchettes ont la forme d'un fût sensiblement cylindrique, auquel sont rattachées, par l'intermédiaire d'une partie appelée « toile », deux branches perpendiculaires à l'axe du fût et formant ensemble un demi-cercle. Ces branches se terminent chacune par un patin. Dans certains cas, il est nécessaire de surmouler une coque en composite de type polyamide chargé en fibres de verre autour des patins, pour résoudre des problèmes de résistance à l'usure des patins de la fourchette. Ce surmoulage a, entre autres inconvénients, celui d'obliger à affaiblir la zone voisine des patins de la fourchette pour conserver à la fourchette des dimensions compatibles avec l'environnement très encombré dans lequel elle est placée.

Les fourchettes sont montées rigides ou coulissantes sur un axe qui traverse le fût. Parfois, c'est l'axe sur lequel la fourchette est montée qui porte une crosse équipée d'un crabot, lequel, sous l'action d'un doigt de commande, transmet à la fourchette les efforts nécessaires pour réaliser le passage d'une vitesse à une autre. Mais sur d'autres fourchettes cette crosse et ce crabot sont directement intégrés à la fourchette. Le crabot doit supporter des efforts intenses lors des passages de vitesses, particulièrement dans le cas d'une conduite « sportive » de la part de l'utilisateur du véhicule, ou dans le cas de boîtes de vitesses à commande robotisée pour lesquelles les changements de vitesses sont très rapides, de l'ordre de quelques dixièmes de seconde. Ces efforts sont transmis à la fourchette (directement ou indirectement selon que la crosse est ou non intégrée à la fourchette), qui les transmet elle-même par contact glissant à un baladeur, par l'intermédiaire de patins situés à l'extrémité de chacun des branches. Un patin central, situé sur le bord inférieur de la toile entre les bases des deux branches, peut également être présent. Sa fonction est, en cas d'efforts particulièrement élevés (par exemple supérieurs à 700 N) exercés sur les branches de la fourchette et aboutissant à une déformation de celle-ci, de venir au contact du baladeur et de contribuer lui aussi à sa mise en mouvement. On soulage ainsi les branches de la fourchette, ce qui permet d'éviter une déformation excessive qui risquerait de devenir définitive ou d'entraîner une rupture de la pièce.

Les matériaux généralement utilisés pour la fabrication des fourchettes de boîtes de vitesses sont les alliages dits « cupro-aluminiums » contenant (toutes les compositions données dans ce texte sont exprimées en pourcentages pondéraux) 8-10,5% de Al, 0-5% de Fe, 0-5% de Ni, le reste étant du Cu, ou le laiton injecté sous pression, ou les fontes GS (dans ce cas, les patins de la fourchette sont surmoulés par une coque en polyamide chargé en fibres de verre), ou une tôle d'acier à haute limite élastique (dans ce cas, les patins de la fourchette sont surmoulés par une coque en polyamide chargé en fibres de verre, ou sont des composants en polyamide chargé de fibres de verre surmoulés autour d'un corps métallique et montés pivotant sur l'extrémité des branches de la fourchette). On utilise aussi parfois des aciers forgés comme le C45, le 38MnVS6, le 34CrMo4 ou le 42CrMo4.

On trouve également des fourchettes en alliage d'aluminium AISi9Cu3 avec des patins surmoulés par une coque en polyamide chargé en fibres verre. Elles comportent parfois une crosse en acier, solidarisée à la fourchette par un assemblage mécanique du type rivetage, ou par assemblage surmoulé d'une partie de la crosse, dont la géométrie est aménagée de manière à demeurer solidaire de la fourchette lors de la fabrication par un procédé de fonderie par injection sous pression de l'alliage d'aluminium. Cette crosse en acier, solidaire de la fourchette, doit résister aux efforts générés lors du passage de vitesses par le doigt d'actionnement coopérant par contact avec ou sans glissement relatif avec les faces d'encoche aménagées dans la crosse. Ces faces d'encoche sont généralement traitées thermiquement (trempe, nitruration) afin d'augmenter leur dureté superficielle pour une meilleure résistance aux contraintes de pression et au glissement relatif sous contraintes de pression.

Le laiton généralement utilisé est un laiton à 2-4% d'Al, 25-30% de Zn, 3-4% de Mn et 1-3% de Fe environ, le reste étant du Cu. Cette matière a pour avantages d'être ductile et de présenter une dureté élevée (160 HB environ) et une bonne tenue en fatigue du fait de sa limite à la rupture de l'ordre de 500 MPa pour l'alliage de laiton CuZn27Mn3Fe2, associée à une ductilité élevée caractérisée par un coefficient d'allongement supérieur à 5%. Mais elle a aussi des inconvénients.

Le premier est son poids élevé, sa densité étant de l'ordre de 7,8 à 8.

Sa limite élastique est aussi relativement basse, de l'ordre de 350 MPa.

Il serait donc important, notamment dans le cadre de la volonté généralisée d'allégement des véhicules, de trouver une matière qui puisse avantageusement remplacer le laiton précité pour la fabrication des fourchettes de boîtes de vitesses, sans que cela conduise à modifier très sensiblement la configuration des fourchettes connues, de manière à rendre inutile une modification de leur conception globale, ou une modification des cotes des autres pièces d'une boîte de vitesses préexistante. Bien entendu, il faudrait aussi conserver autant que possible les avantages en termes de propriétés mécaniques qui ont conduit à l'utilisation courante de ce laiton, ainsi que des autres matériaux couramment utilisés pour la fabrication des fourchettes de boîtes de vitesses et que l'on a précédemment cités. Cette matière devrait aussi avantageusement pouvoir être utilisée pour la fabrication d'autres éléments de la boîte de vitesse qui sont soumis à des contraintes de flexion, de contact glissant, d'usure et de matage comparables à celles subies par les fourchettes.

Le document JP-A-56102546 décrit un élément de boîte de vitesses en alliage aluminium-silicium, notamment une fourchette selon le préambule de la revendication 1.

Le document FR-A-2633074 divulgue une fourchette de boîte de vitesses comprenant une crosse intégrée.

A cet effet, l'invention a pour objet une fourchette de boîte de vitesses de véhicule selon la revendication 1.

Sa composition peut être choisie parmi les compositions énumérées dans la revendication 2.

Elle peut comporter également un patin central formant une surépaisseur sur le bord inférieur de la toile.

On décrit également un levier de crabotage de commande de marche arrière.

On décrit également une clef d'inter-verrouillage d'un module de commande interne de ladite boîte de vitesses.

On décrit également un corps de doigt de commande conçu pour coopérer avec une clef d'inter-verrouillage d'un module de commande interne de ladite boîte de vitesses.

L'invention a également pour objet un procédé de fabrication selon l'une quelconque des revendications 4, 5, ou 6, et comportant éventuellement en outre les caractéristiques de la revendication 7.

L'invention a également pour objet une boîte de vitesses de véhicule selon la revendication 8.

Comme on l'aura compris, l'invention repose sur l'utilisation, pour constituer une fourchette de boîte de vitesses avec une crosse intégrée, d'un type d'alliages d'Al connu par ailleurs, mais qu'*a priori,* rien ne destinait particulièrement à cette application.

Ces alliages sont, de manière générale, des alliages hyper-eutectiques saturés en Si (ils en comportent entre 16 et 27%), pour des raisons que l'on expliquera.

Il y avait à première vue de nombreux obstacles à l'utilisation d'un alliage d'Al pour constituer un élément de boîte de vitesses, et en particulier une fourchette de boîte de vitesses. On pensait que la crosse ne pourrait pas résister aux efforts exercés par les doigts qui actionnent la fourchette, et qu'il se produirait un phénomène de matage trop important, c'est à dire une déformation plastique localisée de la matière sous l'effet des chocs ou des pressions élevées subies. La limite conventionnelle d'élasticité de l'alliage donné en exemple privilégié est encore plus basse (de l'ordre de 200 MPa) que celle du laiton classiquement utilisé, et elle est proche de la limite à la rupture. Cela est associé à un coefficient d'allongement faible (inférieur à 1%), et induit une malléabilité et une susceptibilité à la déformation permanente très médiocre.

Et pourtant, les expériences ont montré que la classe d'alliages précitée permettait de procurer aux fabricants de boîtes de vitesses une fourchette présentant les qualités de résistance mécanique requises, en étant, de plus, notablement plus légère que les fourchettes en matériaux classiquement utilisés, comme le laiton HR, le cupro-aluminium, la fonte ou la tôle d'acier.

L'un de ces alliages est le AlSi17Cu4Mg qui a pour composition Si = 16-19%, Fe ≤ 1%, Cu = 4-5%, Mn ≤ 0,6%, Mg = 0,5-0,6%, Zn ≤ 0,2%, Ti ≤ 0,2%, le reste étant de l'Aluminium et des impuretés résultant de l'élaboration.

Des alliages des nuances 390.0 (ou AlSi21CuNi), A390.0 et B390.0 selon l'American National Standards Institute, ou bien encore un alliage de la nuance EN AC-Al Si17Cu4Mg selon la norme NF EN 1706, recoupant partiellement la plage de composition indiqués précédemment, sont aussi utilisables.

Leurs compositions sont, pour les nuances 390.0, A390.0 et B390.0 : Cu = 4-5% ; Mg = 0,45-0,65% ; Si = 16-18% ; Fe ≤ 1,3% ; Zn ≤ 1,5% ; Ni ≤ 0,10% : Mn ≤ 0,60% ; Ti ≤ 0,2%), le reste étant de l'Al et des impuretés résultant de l'élaboration.

D'autres nuances comme l'AlSi18CuMgNi (Si = 17-19%, Fe ≤ 1%, Cu = 0,8-1,5%, Mn ≤ 0,2%, Mg = 0,8-1,3%, Ni = 0,8-1,3%, Zn ≤ 0,3%, Ti ≤ 0,2%, le reste étant de l'Al et des impuretés résultant de l'élaboration), l'AlSi25CuMgNi (Si = 23-26%, Fe ≤ 1 %, Cu = 0,8-1,5%, Mn ≤ 0,2%, Mg = 0,8-1,3%, Ni = 0,8-1,3%, Zn ≤ 0,2%, Ti ≤ 0,2%, Cr ≤ 0,6%, le reste étant de l'Al et des impuretés résultant de l'élaboration) et leurs variantes habituelles complètent encore la liste des alliages utilisables dans le cadre de l'invention.

De manière générale, les alliages utilisés dans l'invention doivent être des alliages hyper-eutectiques, de façon à présenter les grains de Si primaires et, donc, devraient contenir une teneur en Si d'au moins 12,7 % si on s'en tenait strictement aux diagrammes de phases classiques. Dans la pratique, cependant, cette teneur minimale doit être légèrement plus élevée (16 %) afin de présenter un nombre de grains suffisamment élevé pour pouvoir générer les propriétés recherchées.

Concernant la teneur maximale de l'alliage en Si, il faut savoir que plus la teneur en Si augmente, plus il est difficile d'obtenir des pièces présentant des grains primaires pas trop gros et uniformément répartis, ce qui est nécessaire comme on le verra plus loin. De plus, l'écart entre liquidus et solidus augmente de façon drastique avec la teneur en Si, et les températures de verse de ces alliages Al-Si se situent au delà des plages classiquement observées pour la fonderie d'aluminium. Cela fait que ces alliages, coulés par des méthodes classiques de fonderie ou usinés, ne devront pas présenter de teneur en Si dépassant les 27 % pour conserver une facilité de mise en oeuvre adéquate en application industrielle. C'est le cas des principaux alliages utilisables dans l'invention, que l'on a cités plus haut.

Le fait que les grains de Si soient chimiquement purs à quasiment 100% a pour conséquence la localisation de tous les autres éléments d'alliage dans la phase eutectique contenant principalement de l'Al. L'adjonction d'autres éléments en quantités modérées n'influera donc que sur la matrice, et non sur les grains primaires. En fonctions des connaissances de l'homme du métier, les différents éléments autres que Al et Si complétant l'alliage seront donc ajoutés en fonction des propriétés précises recherchées pour le matériau et de sa mise en oeuvre.

Ainsi, l'emploi d'agents affinant à faible teneur, comme Ti ou P, améliore la qualité de la structure en diminuant la taille des grains. Fe peut être à éviter car il est néfaste de ce point de vue. Toutefois, il peut être significativement présent (jusqu'à 1%) lorsque l'alliage est destiné à être coulé par injection sous pression, car il permet de protéger l'appareillage des agressions corrosives par les alliages d'Al liquides.

Le Cu et le Mn améliorent fortement les propriétés mécaniques de l'alliage, mais présentent des effets néfastes à trop forte teneur : augmentation de la sensibilité à la corrosion, difficultés à usiner la pièce. Leurs teneurs devront donc de préférence être maintenues dans les limites fixées par les définitions des nuances précitées.

Une raison pour laquelle ces alliages s'avèrent particulièrement adaptés à la réalisation de fourchettes de boîtes de vitesses à la fois légères et résistantes aux fortes et fréquentes sollicitations auxquelles elles sont soumises est la présence, au sein de la matrice, de cristaux primaires de Si. Ceux-ci, même en cas d'usure de la pièce lors de son frottement avec l'acier constituant les pièces avec lesquelles elle est en contact au niveau des patins et de la crosse (lorsque celle-ci est présente et intégrée de construction à la fourchette), subsistent sur la fourchette en raison de leur particulière dureté. Ils présentent, de plus, un coefficient de frottement avec l'acier particulièrement faible. L'usure de la matrice d'Al crée des microcavités à la surface des portions de la fourchette sollicitées en frottement, entre les cristaux primaires de Si, mais ces cavités peuvent se remplir d'huile de lubrification et on obtient rapidement un bon rodage de la fourchette et des surfaces du baladeur coopérant par contact glissant avec les patins de la fourchette. Dans la pratique, l'usure des patins ne doit, de préférence, pas dépasser 0,2 mm par face après ce rodage. Concernant l'usure du crabot de la crosse, lorsqu'il y en a une, la déformation par écrouissage et usure cumulés des faces de l'encoche du crabot induite par des phénomènes de déformations plastiques et d'usure ne doit, de préférence, pas dépasser des limites sensiblement égales à la moitié de ce qui est autorisé pour l'usure des patins de la fourchette, donc de l'ordre de 0,1 mm.

Il était connu que les alliages utilisables dans le cadre de l'invention présentaient des propriétés de résistance mécanique élevées, et l'effet bénéfique des cristaux primaires de Si sur le frottement était connu. Mais on n'avait jamais testé la limite d'endurance de ces alliages, autrement dit leur comportement en fatigue, dans des plages de température telles que celles subies par les fourchettes de boîtes de vitesses, soit entre -30°C et +180°C, et dans l'état de l'alliage obtenu par des procédés de fonderie du type moulage gravité en coquille métallique sans traitement thermique ou du type moulage par injection sous pression.

Il existe seulement dans la littérature quelques informations concernant la limite d'endurance notée σ_{bw} de l'alliage d'Al AlSi17Cu4Mg à partir de tests normalisés, effectués à la température ambiante, sur des barreaux normalisés réalisés en fonderie par moulage gravité en coquille métallique puis traités thermiquement (mise en solution, trempe, revenu) de manière à augmenter sensiblement la limite élastique Rp₀,₂ et la résistance à la traction Rm à des valeurs comprises respectivement entre 270-360 MPa et 280-370 MPa. Les valeurs indiquées pour la limite d'endurance sont de l'ordre de 90 à 125 MPa. Comparativement, le même alliage d'Al, dans l'état brut de fonderie du type moulage par gravité en coquille métallique, à pour caractéristiques mécaniques Rp₀,₂ = 170-225 MPa et Rm = 180-235 MPa.

En l'absence de données disponibles sur le comportement de ces alliages aux températures d'utilisation des fourchettes et autres pièces de boîtes de vitesses soumises aux mêmes types de contraintes mécaniques, il n'était aucunement évident que ces alliages seraient bien adaptés à l'usage selon l'invention.

En particulier, il n'était pas du tout évident que la résistance de la crosse aux sollicitations exercées à son niveau serait suffisante pour que la crosse puisse être intégrée de construction à la fourchette. Un risque d'écrouissage sous l'effet des pressions de Hertz et un risque d'usure sous l'effet conjugué d'un glissement relatif paraissait a priori élevé.

En fait, il s'avère, de façon surprenante, que la fourchette présente une résistance à l'écrasement satisfaisante, malgré des pressions maximales de Hertz supérieures à 1 000 MPa, ce qui est au-delà de la limite à la rupture de l'alliage d'aluminium utilisé pour la fabrication en fonderie par moulage gravité de la fourchette testée. A fortiori, lorsque le doigt de contact qui agit sur la crosse est plat, les pressions de Hertz ne sont pas un problème.

Une des explications probables à l'excellent comportement en fatigue des alliages utilisés dans le cadre de l'invention réside dans le fait que les cristaux primaires de Si peuvent servir de déflecteurs à l'avancée de la fissuration du matériau lors des sollicitations en fatigue. Pour cela, il faut que les cristaux primaires de Si soient de forme arrondie, soient uniformément répartis, et ne soient pas d'une taille trop importante. Les conditions de composition et de coulée de l'alliage exposées plus haut sont adéquates à cet effet. Les alliages ayant une teneur en Si relativement modérée (16-18%) sont, de ce point de vue, plus tolérants à des écarts par rapport à une pratique optimale, qui est à déterminer par l'expérience, que les nuances à plus fort Si (25-27%)

Bien entendu, cette présence de cristaux de Si est à associer à une composition de la matrice d'alliage d'Al qui confère à la fourchette des propriétés mécaniques et tribologiques d'ensemble la rendant compatible avec son utilisation. Les compositions des alliages utilisés préférentiellement dans l'invention répondent très bien à ce critère.

Quel que soit le mode de remplissage des cavités du moule de fonderie, l'obtention des grains de silicium primaires procurant à ces alliages leur tenue mécanique particulière est réalisée dès le départ, donc sans la nécessité d'un traitement thermique ultérieur.

Toutefois, la taille de ces grains entre en ligne de compte pour la tenue en fatigue des pièces de fonderie obtenues. Comme on l'a dit, le mode de remplissage des cavités du moule de fonderie choisi doit permettre d'obtenir des grains primaires avec une taille pas trop importante. Mais il doit aussi permettre une répartition la plus homogène possible de ces grains, en évitant la macro-ségrégation et les concentrations de grains de silicium, sinon la structure est fragilisée. En conséquence, la méthode de fonderie utilisée doit permettre un refroidissement rapide et une limitation de la ségrégation dans les zones critiques du moule susceptibles d'être difficiles à remplir.

Même si l'obtention de pièces adéquates peut être envisagée en coulée sable et si la géométrie de la pièce en question est appropriée, on lui préférera donc le plus souvent la coulée gravité en coquille métallique. La coulée par injection sous pression est, cependant, le procédé qui donne le plus assurément des résultats satisfaisants.

Avantageusement, le procédé de moulage peut être du type injection sous pression en chambre froide, le moule de fonderie sous pression pouvant être équipé d'un dispositif de mise en dépression des cavités d'empreintes à l'aide d'une pompe à vide, afin de faciliter la maîtrise des défauts internes des pièces moulées avec ce procédé, en particulier le niveau de porosités du type soufflures.

On peut avantageusement effectuer des traitements thermiques sur la pièce moulée afin d'augmenter ses caractéristiques mécaniques. Ces traitements thermiques associent classiquement des opérations de mise en solution, de trempe, de maturation, de revenu, comme il est connu d'en pratiquer sur les alliages classiques utilisables préférentiellement dans le cadre de l'invention.

Les qualités requises pour les fourchettes de boîte de vitesses selon l'invention sont variables selon la destination de la fourchette. Les fourchettes permettant le passage aux rapports les plus élevés doivent pouvoir résister sans déformation permanente à des sollicitations au niveau des patins situés aux extrémités des branches de l'ordre de 5 000 cycles à 1 100 N et 4 5000 cycles à 650 N et 400 000 à 700 000 cycles à 300 N. Mais elles doivent aussi pouvoir résister, avec une déformation permanente de moins de 1 mm, à une sollicitation unique, ou limitée à quelques dizaines de cycles, d'intensité exceptionnelle, de l'ordre de 2 500 N selon les spécifications du constructeur et du concepteur de la boîte de vitesses. Ces efforts sont de l'ordre de ceux que subissent les parties d'une fourchette les plus sollicitées en contraintes, en déformation et en frottement lors d'un usage sportif du véhicule ou d'une mauvaise utilisation fortuite du levier de passage de vitesses.

Les valeurs des efforts et des nombres de cycles précités sont données à titre d'exemple à propos des fourchettes d'une boîte manuelle à 5 vitesses faisant partie d'un groupe motopropulseur de véhicule courant, dont la cylindrée, essence ou Diesel, est d'environ 1500 à 2 000 cm³, le couple maximal de l'ordre de 250-300 N.m et la puissance maximale de l'ordre de 100 kW. Ces valeurs d'efforts peuvent être plus élevées dans le cas de boîtes de vitesses mécaniques à changement de vitesses robotisé, ou dans le cas de boîtes de vitesses mécaniques à fort couple, avec ou sans robotisation. Dans ce cas, la robustesse des fourchettes doit être éprouvée après des essais de sollicitations cycliques de passage de vitesses pouvant atteindre 1 800 à 2 000 N. A titre d'exemple, on connaît des spécifications d'endurance en passage de vitesses selon lesquelles cette endurance doit atteindre à la fois 15 000 cycles sous 1 800 N, et 300 000 cycles sous 1 000 N.

Concernant les dimensions des fourchettes, il s'avère que l'utilisation de cet alliage d'Al ne nécessite pas de modifier fondamentalement les dimensions des fourchettes en laiton à 3-4% de Zn, 3-4% de Mn et 1% de Fe environ qu'elles visent à remplacer, à l'exception de quelques renforcements de leur épaisseur dans certaines zones particulièrement sollicitées. Ces renforcements sont, comme on le verra, suffisamment limités pour permettre à la fourchette selon l'invention de s'insérer dans le même espace fortement encombré que les fourchettes de référence en laiton.

L'invention sera mieux comprise à la lecture de la description qui suit, donnée en référence aux figures annexées suivantes :
- les figures 1 et 2 qui montrent, en perspective isométrique avant et arrière respectivement, une fourchette de boîte de vitesses dépourvue de crosse intégrée ;
- la figure 3 qui montre en perspective isométrique arrière un exemple de fourchette selon l'invention, comportant une crosse intégrée ;
- la figure 4 qui montre en perspective isométrique un exemple de levier de crabotage de commande de marche arrière ;
- la figure 5 qui montre en perspective isométrique une clef d'inter-verrouillage de module de commande interne d'une boîte de vitesses ;
- la figure 6 qui montre en perspective isométrique un corps de doigt de commande, conçu pour coopérer avec la clef d'inter-verrouillage de la figure 5 :
- la figure 7 qui montre en perspective isométrique une clef d'inter-verrouillage, conçue pour coopérer avec l'environnement immédiat de la boite de vitesses, comme par exemple le crabot d'une fourchette de boite de vitesses verrouillé par la clef d'inter-verrouillage ;
- la figure 8 qui montre en perspective isométrique un corps de doigt de commande, conçu pour coopérer avec l'environnement immédiat de la boite de vitesses, comme par exemple le crabot d'une fourchette de boite de vitesses actionnée en mouvement de translation par l'intermédiaire d'une patte appartenant au corps de doigt de commande ;
- la figure 9 qui montre en perspective isométrique une clef d'interverrouillage et un corps de doigt de commande, conçus pour coopérer entre eux et avec l'environnement immédiat de la boite de vitesses ; notamment un doigt d'actionnement, dit doigt de passage, dont le mouvement pivotant génère un mouvement de translation du corps de doigt de commande dans la direction de la clef d'inter-verrouillage ou dans une direction opposée.

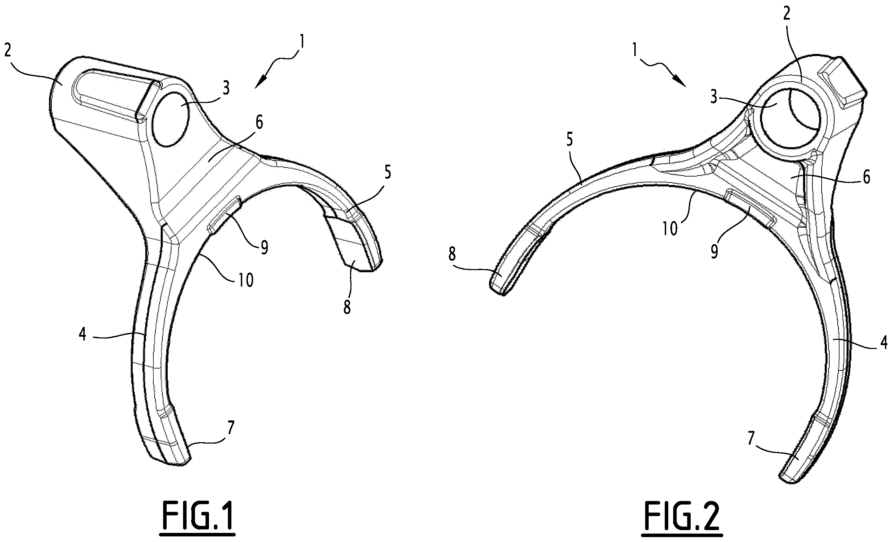

La fourchette représentée sur les figures 1 et 2 est typiquement une fourchette 1 destinée à assurer le passage entre les 5^{ème} et 6^{ème} rapports de la boîte de vitesses. Elle ne comporte pas de crosse intégrée car elle est destinée à être montée rigide sur un axe commun à une autre fourchette (coulissante sur ledit axe) assurant le passage entre le 3^{ème} et le 4^{ème} rapport, l'axe commun étant pourvu d'une crosse soudée sur lui. On y distingue différentes parties, typiques d'une fourchette de boîte de vitesses, à savoir :
- un fût 2 muni d'un orifice alésé 3 destiné à être traversé par l'axe portant la fourchette ;
- deux branches 4, 5 de forme globale sensiblement demi-circulaire destinées à coopérer avec le baladeur ;
- une toile 6 reliant le fût 2 aux branches 4, 5.
- deux patins 7, 8 placés chacun à une extrémité d'une des branches 4, 5 et présentant une surépaisseur par rapport aux branches 4, 5 qu'ils prolongent ;
- et un patin central 9 qui forme une surépaisseur du bord inférieur 10 de la toile 6, et qui a pour fonction de venir au contact du baladeur lorsque la fourchette est soumise à des efforts importants, prédéterminés au moment de la conception de la fourchette 1 (par exemple 700 N au niveau du crabot fixé à l'axe dont la fourchette 1 est solidaire), susceptibles d'entraîner la déformation de la fourchette 1 au-delà d'une valeur prédéterminée (par exemple 0,9 mm au niveau de la partie supérieure du fût 2) ; le patin central 9, dont la présence est optionnelle, permet d'interrompre ou de limiter fortement cette déformation en soulageant les patins 7, 8 des branches 4, 5.

Dans l'exemple décrit et représenté, la fourchette est réalisée en un alliage d'Al de type AlSi17Cu4Mg de composition Si = 16-19%, Fe ≤ 1%, Cu = 4-5%, Mn ≤ 0,6%, Mg = 0,5-0,6%, Zn ≤ 0,2%, Ti ≤ 0,2%.

Un exemple non limitatif de son procédé de fabrication est le suivant.

La fourchette 1 est fabriquée par un procédé de fonderie par gravité dans un moule à une ou plusieurs empreintes. Avant le moulage, on procède, de manière connue, à une pulvérisation d'enduit de poteyage sur les surfaces des empreintes et de la broche servant à la conformation de l'orifice 3 du fût 2, préalablement chauffées à environ 150°C en peau (du moins avant la coulée de la première pièce de la série réalisée avec ce moule; pour les pièces ultérieures coulées peu après la première, on peut se contenter de laisser les parois du moule à leur température naturelle suivant le démoulage de la pièce précédente). Il est toutefois recommandé de procéder à une pulvérisation d'un enduit de poteyage après chaque démoulage.

De façon connue, cette température naturelle peut, cependant, être modifiée de façon contrôlée grâce à un dispositif de thermo-régulation à l'huile ou à l'eau aménagé dans le moule (canaux de circulation du fluide caloporteur), et grâce à un équipement de thermorégulation connecté au moule permettant de maintenir le fluide caloporteur à une température comprise entre une valeur minimale et une valeur maximale.

Dans le cas d'une thermorégulation à l'huile, le dispositif de thermorégulation connecté au moule doit ramener le fluide à une température de l'ordre de 200°C avant de circuler dans les canaux de thermo-régulation aménagés dans le moule.

De plus, il est recommandé, après chaque coulée, de pulvériser un enduit de poteyage dilué dans de l'eau sur les surfaces des cavités du moule, puis d'accélérer le séchage des surfaces moulantes par jet d'air sous pression, afin de faciliter le démoulage de la pièce après solidification et afin de limiter l'échauffement des surfaces moulantes. Cette technique est bien connue de l'homme du métier.

Le préchauffage et le contrôle des températures minimale et maximale admissibles à la surface des parties moulantes permettent d'éviter la formation de défauts internes et externes de la pièce issue du moule, comme des retassures, des malvenues, des gouttes froides.

Les excès d'enduit de poteyage sont éliminés avec une brosse métallique.

Le moule ainsi préparé est monté sur une coquilleuse et amené près du four de maintien où l'alliage d'Al se trouve à l'état fondu. La coulée a lieu à une température de l'ordre de 700°C, à adapter plus précisément, selon le savoir-faire habituel des fondeurs, en fonction de la température de fusion précise de l'alliage, et de la configuration et de l'état de préchauffage du moule. Egalement de manière habituelle pour les fondeurs, on prévient l'apparition de défauts au sein du produit moulé, tels que des malvenues, en installant des tirets d'air sur le moule aux endroits les plus exposés à l'emprisonnement d'air.

Dans le cas d'une fonderie par gravité dans un moule du type coquille métallique, on verse l'alliage fondu dans le moule à une vitesse modérée, là encore pour éviter l'emprisonnement d'air.

Comme il est connu de l'homme du métier, des poches aménagées dans les empreintes du moule permettent également de remplir des masselottes qui ont pour fonction de réduire ou d'éliminer localement les phénomènes de retassures dans la pièce. Ces masselottes peuvent servir également de talons de lavage en emprisonnant certains oxydes, excédents d'enduit de poteyage et gaz. Ces talons de lavage sont souvent connectés aux tirets d'air.

Après son démoulage, la fourchette peut, si nécessaire, subir des opérations de rectification et d'usinage lui conférant ses dimensions précises et son état de surface définitifs, ainsi que des traitements thermiques permettant d'améliorer ses propriétés mécaniques. Ces traitements peuvent être, notamment, ceux qui sont connus pour être pratiqués sur l'alliage lorsqu'il est utilisé pour d'autres applications, pour lesquelles des propriétés de l'alliage classiquement connues sont aussi recherchées dans le cadre de l'invention. Bien entendu, ces traitements ne doivent pas sensiblement dégrader les propriétés spécifiquement exigées par l'invention parce qu'elles sont typiques des fourchettes de boîtes de vitesses.

En fait, le procédé de fabrication ci-dessus et son optimisation ne présentent pas de particularités qui iraient au-delà des compétences générales de l'homme du métier en matière de fonderie des alliages d'Al. On peut remarquer que, contrairement aux fourchettes en laiton classiques que les fourchettes selon l'invention visent à remplacer, il n'est pas forcément obligatoire de faire appel à un procédé d'injection sous pression qui nécessite un appareillage nettement plus complexe que le moulage par gravité.

Cela dit, on peut utiliser un procédé de moulage par injection sous pression pour fabriquer une fourchette selon l'invention, si par exemple cette fourchette doit avoir une configuration particulièrement complexe pour laquelle un moulage par gravité pourrait ne pas garantir une qualité de fabrication suffisante.

La coulée par gravité en coquille métallique présente l'avantage de nécessiter des moyens de fonderie nettement moins coûteux que les dispositifs de fonderie sous pression. Le prix de revient du moule est également inférieur. Néanmoins, comme l'homme du métier le sait, le remplissage des cavités du moule dépend de la force de gravité et de la conception des canaux d'alimentations des cavités, ainsi que de l'emplacement des tirets d'air et autres éléments assistant le remplissage du moule, comme les masselottes et les talons de lavage. Une bonne expertise de la conception des coquilles métalliques pour fonderie gravité des alliages d'aluminium est conseillée pour que le fabricant puisse obtenir des pièces sans retassures, soufflures et malvenues.

Dans le cas d'un procédé de fonderie sous pression, le remplissage des cavités du moule est assisté mécaniquement, car les équipements modernes permettent de paramétrer en trois phases le remplissage du moule. Dans une première phase, le piston pousse l'alliage liquide contenu dans le récipient d'alimentation du moule appelé « container », jusqu'à ce que le métal arrive aux attaques de coulée. Il s'agit d'un transfert d'alliage dudit récipient vers les canaux principaux d'alimentation des empreintes du moule. Ce transfert peut se paramétrer en vitesse, en accélération, en temps. Dans une deuxième phase, le piston continue sa translation dans le récipient et force l'alliage à remplir d'une façon rapide les cavités du moule. Là encore, on peut paramétrer cette deuxième phase en vitesse, en accélération, en temps. Dans la troisième phase, le piston exerce une pression sur l'alliage encore liquide de manière à compacter les volumes gazeux emprisonnés dans l'alliage, et à achever le remplissage des zones qui seraient particulièrement difficiles à remplir par un procédé de gravité. Cette troisième phase peut être paramétrée en pression et en course du piston, même si celle-ci est faible, à partir de sa position de déclenchement par rapport à la fin de la deuxième phase. Bref, cette assistance au remplissage du moule permet au fondeur de résoudre la plupart des problèmes associés à un remplissage par gravité.

En production en série, pour des volumes importants, on peut privilégier l'injection sous pression pour la mise en oeuvre de l'invention, d'autant plus qu'il est relativement facile de concevoir des moules à plusieurs cavités et de paramétrer l'installation sous pression pour obtenir, à l'aide de ces moules à plusieurs cavités, des pièces saines avec des défauts absents ou acceptables. Dans le cas des procédés par gravité, les moules à plusieurs cavités sont très difficiles à mettre au point. Par conséquent, on utilisera de préférence le procédé par gravité pour couler des pièces en alliage d'aluminium dans le cadre d'une phase de fabrication de prototypes de pièces, ou pour des quantités de pièces fabriquées relativement faibles.

La fourchette pourrait également être entièrement usinée à partir d'une ébauche si elle devait posséder des qualités de précision dimensionnelles particulières pour satisfaire à un cahier des charges très exigeant. Là encore, un traitement thermique peut compléter le procédé de fabrication de la pièce.

Les principales formes et dimensions de la fourchette 1 représentée sont les suivantes :
- le diamètre de l'orifice 3 du fût 2 : 15 mm ;
- les épaisseurs des patins 7, 8 placés aux extrémités des branches 4, 5 : 12,4 mm ;
- l'épaisseur du patin central 9 : 11 mm ;
- la géométrie des branches 4, 5 de la fourchette 1: leur section est sensiblement rectangulaire, et augmente progressivement à mesure que l'on s'approche de la toile 6 de la fourchette 1 ; elle passe de 4 x 8 à 6 x 10 mm ; cette dernière dimension est importante pour conférer à la fourchette 1 une robustesse comparable à celle d'une fourchette en laiton de géométrie similaire ;
- la géométrie des nervures de raccordement des branches 4, 5 au fût 2 et à la toile 6 de la fourchette 1 qui jouent le rôle de raidisseurs limiteurs de contraintes ; ces raidisseurs sont conçus pour obtenir une flexibilité de la fourchette supérieure à une valeur de l'ordre de 500-600 N/mm, et de manière à limiter les contraintes maximales dans la zone de la toile à des valeurs inférieures à 130 MPa ;
- les positions relatives des surfaces des patins 7, 8 coopérant par contact glissant avec le baladeur, par rapport à la surface du patin central 9 (pour les deux côtés de la fourchette 1) : les patins 7, 8 sont distants de 83 mm ; le patin central 9 permet de limiter les contraintes dans les branche 4, 5 de la fourchette 1 ; d'autre part, même si pour des efforts élevés, largement supérieurs à l'effort pour lequel le patin central 9 entre en contact avec le baladeur, le patin central 9 supporte des efforts avec glissement relatif élevés, le fait que l'alliage sélectionné résiste fortement à l'usure permet de maintenir la configuration de la fourchette en laiton de référence sur ces positions relatives des patins 8, 9 ; en effet, si le patin central 9 s'usait rapidement, alors l'effort pour lequel le patin central 9 entre en contact avec le baladeur augmenterait rapidement, si bien que les contraintes dans les deux branches 4, 5 de la fourchette 1 augmenteraient aussi de façon non contrôlée, jusqu'à entraîner une rupture prématurée de la fourchette 1 ;
- l'épaisseur de la toile de la fourchette : environ 10 mm.

Le poids de cette fourchette 1 selon l'invention est de 87 g.

A titre de comparaison, une fourchette de référence réalisée en un laiton du type CuZn27Mn3Fe2 et à laquelle la fourchette 1 serait destinée à se substituer aurait pratiquement les mêmes dimensions que la fourchette en alliage d'aluminium 1 ; l'épaisseur de la toile serait plus faible localement, de 2 mm environ, pour la fourchette en laiton, la section sensiblement rectangulaire des branches de la fourchette en laiton augmenterait de façon moindre à mesure que l'on s'approcherait du raccordement à la toile 6, soit une section de 4 x 8 mm au lieu de 6 x 10 mm pour la fourchette 1 selon l'invention. Son poids serait de 175 grammes, donc environ le double de celui de la fourchette 1 selon l'invention.

Les propriétés mécaniques principales de la fourchette 1 en alliage AlSi17Cu4Mg de composition précise Si = 16-19%, Fe ≤ 1%, Cu = 4-5%, Mn ≤ 0,6%, Mg = 0,5-0,6%, Zn ≤ 0,2%, Ti ≤ 0,2% selon l'invention, coulée en fonderie gravité dans un moule du type coquille métallique et de la fourchette en laiton de référence sont les suivantes:
- Rp₀,₂ : 185 MPa, contre 350 MPa pour la version en laiton ;
- dureté : 120 HB 2,5, contre > 160 HB 2,5pour la version en laiton ;
- contraintes de Von Mises calculées par la méthode des éléments finis à partir du modèle 3D solide : < 130 MPa dans les zones les plus contraintes avec un effort appliqué de 800 N, contre localement environ 250 MPa pour la version en laiton ;
- flexibilité mesurée des branches 4, 5 de la fourchette 1: comprise entre 590 et 630 N/mm, contre environ 500 N/mm pour la version en laiton ;
- intensité de l'effort d'intervention du patin central : entre 800 et 900 N pour la fourchette 1, contre environ 1400 N pour la version en laiton ;
- déformation rémanente après un effort appliqué de 2600 N: < 0,15 mm pour la fourchette 1, contre < 0,17 mm pour la version en laiton.

On voit donc que l'exemple de fourchette 1 a des dimensions principales identiques ou très proches de celles de la fourchette de référence en laiton, et des propriétés mécaniques tout à fait compatibles avec l'utilisation de la fourchette de référence, voire encore meilleures à certains points de vue. Elle peut donc sans problèmes remplacer la fourchette de référence dans une boîte de vitesses de conception préexistante, aussi bien qu'être utilisée dans un nouveau type de boîte de vitesses conçue dès l'origine pour faire usage du type d'alliage d'Al décrit dans le présent document.

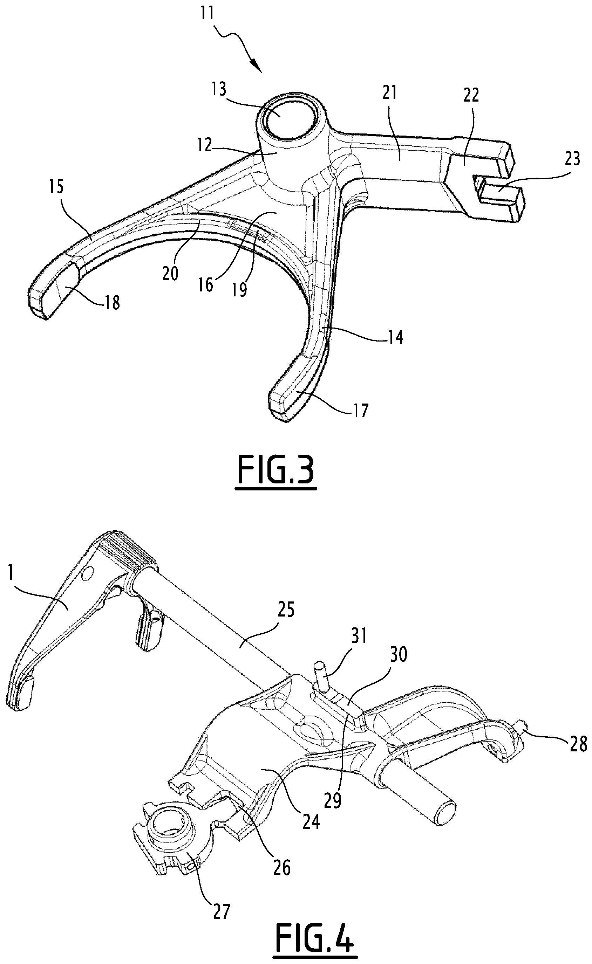

Un exemple de fourchette 11 selon l'invention, représenté sur la figure 3, est une fourchette destinée à la même boîte de vitesses que la fourchette 1, et destinée à assurer le passage entre les 1^{er} et 2^{ème} rapports. Comme la précédente, elle comporte :
- un fût 12 muni d'un orifice alésé 13 destiné à être traversé par l'axe portant la fourchette ;
- deux branches 14, 15 de forme sensiblement demi-circulaire destinées à coopérer avec le baladeur ;
- une toile 16 reliant le fût 12 aux branches 14, 15.
- deux patins 17, 18 placés chacun à une extrémité d'une des branches 14, 15 et présentant une surépaisseur par rapport aux branches 14, 15 qu'ils prolongent ;
- et un patin central 19 qui forme une surépaisseur du bord inférieur 20 de la toile 6.

De plus, la fourchette 11 comporte une crosse 21 s'étendant à partir du fût 12 selon une direction sensiblement perpendiculaire à celle de l'axe de l'orifice 13. Cette crosse se termine par un crabot 22 présentant deux échancrures 23 pour sa mise en prise avec un doigt de commande lors du passage de la 1^{ère} ou de la 2^{ème} vitesse.

La fourchette 11 peut être réalisée dans le même alliage que la fourchette 1 précédemment décrite et représentée, ou dans un alliage différent mais répondant néanmoins aux critères de composition définis plus haut comme étant ceux de l'invention.

Son procédé de fabrication peut être identique ou comparable à l'exemple décrit plus haut pour la fabrication de la fourchette 1 précédente.

Les principales dimensions de la fourchette 11 représentée sont les suivantes :
- diamètre de l'orifice 13 du fût 12: 15 mm ;
- épaisseurs des patins 17, 18 des branches 14, 15 : 12,4 mm ;
- épaisseur du patin central 19 : 11 mm ;
- la géométrie des branches 14, 15 : leur section est sensiblement rectangulaire, et augmente progressivement vers la toile 16 de la fourchette 11 ; elle passe de 4 x 9 à 5 x 10 mm ; cette dernière dimension est importante pour conférer à la fourchette 11 une robustesse comparable à celle d'une fourchette en laiton de géométrie similaire ;
- la géométrie des nervures de raccordement des branches 14, 15 au fût 12 et à la toile 16 de la fourchette 11 qui jouent le rôle de raidisseurs limiteurs de contraintes ; les raidisseurs sont conçus pour obtenir une flexibilité de la fourchette supérieure à une valeur de l'ordre de 500-600 N/mm, et de manière à limiter les contraintes maximales dans la zone de la toile à des valeurs inférieures à 140 MPa ;
- les positions relatives des surfaces des patins 17, 18 des branches 14, 15 coopérant par contact glissant avec le baladeur par rapport à la surface du patin central 19 (pour les deux côtés de la fourchette 11) : les patins 17, 18 sont distants de 85,3 mm ;
- l'épaisseur de la toile de la fourchette : 6 mm ;
- la géométrie du raccordement rayonné de la crosse 21 sur le fût 12 de la fourchette 11 ; son rayon de courbure est de 6 mm ;
- l'épaisseur de la crosse 21 au niveau du crabot 22 : 6 mm ;
- le rayon de raccordement des échancrures 23 sur le corps de la crosse 21 au niveau du crabot 22 : 1 mm ;
- la géométrie de la crosse 21, notamment sa section qui est de 30 x 4 mm.

Son poids est de 120 g.

A titre de comparaison, une fourchette de référence réalisée en un laiton du type CuZn27Mn3Fe2 et à laquelle la fourchette 11 serait destinée à se substituer aurait des dimensions pratiquement identiques à celles de la fourchette 11 en alliage d'aluminium selon l'invention. L'épaisseur de la toile serait sensiblement identique. La section sensiblement rectangulaire des branches de la fourchette en laiton augmenterait de façon moindre en direction du raccordement à la toile, soit une section de 4 x 9 mm pour la section située juste avant le raccordement avec la toile, l'épaisseur de la crosse au niveau du crabot serait identique, de l'ordre de 6 mm, la section de la crosse serait de 18 x 5 mm.

Son poids serait de 266 g, donc plus de 2 fois supérieur à celui de la fourchette 11 de l'invention.

Les propriétés mécaniques principales de la fourchette 11 en alliage AlSi17Cu4Mg de composition précise Si = 16-19%, Fe ≤ 1%, Cu = 4-5%, Mn ≤ 0,6%, Mg = 0,5-0,6%, Zn ≤ 0,2%, Ti ≤ 0,2%) selon l'invention, coulée en fonderie gravité dans un moule du type coquille métallique et de la fourchette en laiton de référence sont les suivantes:
- Rp₀,₂ : 185 MPa, contre 350 MPa pour la version en laiton ;
- dureté : 120 HB 2,5, contre> 160 HB 2,5 pour la version en laiton ;
- contraintes de Von Mises calculées par la méthode des éléments finis à partir du modèle 3D solide : < 130 MPa dans les zones les plus contraintes avec un effort appliqué de 800 N ;
- flexibilité mesurée des branches 14, 15 de la fourchette 1: comprise entre 550 et 600 N/mm (environ 400 N/mm pour la version en laiton) ;
- intensité de l'effort d'intervention du patin central : entre 900 et 1 000 N pour la fourchette 11 (environ 1200 N pour la version en laiton) ;
- déformation rémanente après un effort appliqué de 2600 N: < 0,3 mm pour la fourchette 1 (< 0,4 mm pour la version en laiton).

On voit donc que, là encore, le remplacement d'une fourchette en laiton classique par une fourchette 11 en alliage d'Al-Si selon l'invention, ayant sensiblement le même encombrement, peut être effectué sans difficultés, alors que la présence d'une crosse intégrée soumise à des efforts directs intenses de la part du doigt de commande pouvait être à première vue une sérieuse contre-indication à l'utilisation d'un alliage d'Al en général.

Le choix particulier, pour ce faire, du type d'alliage d'Al-Si précité et, en particulier, des classes d'alliages Al-Si que l'on a citées, dont les remarquables propriétés en fatigue étaient jusqu'alors inconnues, autorise un tel remplacement. Il ouvre également de nouvelles perspectives sur la conception d'ensemble de boîtes de vitesses plus légères, mais pas moins performantes, que celles qui existent aujourd'hui et utilisent des fourchettes en laiton ou autres matériaux relativement lourds.

On a également pu vérifier que le comportement en usure/matage (lors d'un contact glissant sous forte pression) des alliages utilisés dans l'invention était excellent par rapport à d'autres alliages d'Al moins riches en Si.

A cet effet, on a monté à l'extrémité d'un levier de crabotage en fonte usinée trempée un insert destiné à constituer une des faces de l'encoche du crabot, précisément la face sur laquelle s'exerce un effort cyclique de 1 000 N de la part d'un doigt d'actionnement à profil rayonné de rayon R=4 mm, pivotant autour d'un axe de rotation et actionné par un vérin. La zone de contact était huilée. Les pressions maximales de Hertz à l'interface de contact glissant ont été calculées et sont de l'ordre de 800 MPa.

Un alliage AISi9Cu3 (ayant une teneur en Si de l'ordre de 9% et, donc, non utilisable dans le cadre de l'invention) a d'abord été testé pendant 10 000 cycles. L'usure constatée a été de 0,08 mm en profondeur. Au bout de 80 000 cycles, cette usure passe à 0,16 mm.

Puis on a remplacé cet insert par un insert de même géométrie en alliage AlSi17Cu4Mg utilisable selon l'invention. Après 11 400 cycles d'efforts dans les mêmes conditions que précédemment, l'usure constatée n'était que de 0,05 mm en profondeur. Elle était de 0,06 mm après 50 000 cycles, de 0,07 mm après 84 000 cycles, pour se stabiliser à 0,11 mm après 150 000 cycles, les essais ayant été stoppés à 500 000 cycles. L'usure finit donc par se stabiliser à une valeur très acceptable. Par comparaison, l'usure constatée dans les mêmes conditions pour une pièce semblable en laiton serait de plusieurs dixièmes de millimètres, voire au-delà d'un millimètre.

Ces conditions de test étaient particulièrement sévères, du fait que le doigt d'actionnement qu'on a utilisé avait un profil rayonné, ce qui tend à concentrer les contraintes et, donc, à accentuer l'usure localisée de la face du crabot concernée. Dans les boîtes de vitesses du type où le doigt d'actionnement a un profil plat dans sa zone de contact avec le crabot, cette usure serait nettement moindre du fait que le contact doigt/crabot est plus franc et quasiment sans glissement.

On a décrit en détail jusqu'ici uniquement l'application des alliages d'Al-Si choisis à la fabrication de fourchettes de boîtes de vitesses, avec ou sans crosse et crabot intégrés. Cependant, on décrit également toutes autres pièces de boîtes de vitesses qui seraient soumises à des contraintes de natures comparables à celles subies par les fourchettes au cours de l'utilisation du véhicule.

C'est, par exemple, le cas des leviers de crabotage de commande de marche arrière, tel que celui 24 que l'on voit sur la figure 4, qui sont généralement fabriqués en fonte ou en acier. Il est monté au moyen d'une goupille sur un axe 25 qui est aussi, dans l'exemple représenté, celui sur lequel est montée une fourchette 1 similaire à celle précédemment décrite et représentée sur les figures 1 et 2. Le levier de crabotage 24 comporte une encoche 26 dans laquelle s'insère un doigt d'actionnement 27 monté pivotant, et dont l'extrémité comportant un profil rayonné transmet par contact glissant un mouvement de translation à l'ensemble formé par le levier 24 et l'axe 25. Sur l'une des extrémités du levier 24 est fixée une goupille 28 orientée perpendiculairement à l'axe 25 et destinée à coopérer par contact glissant avec un mécanisme non représenté sur la figure 4 ; ladite goupille 28 permet de transformer le mouvement de translation du levier 24 en un mouvement plus ou moins complexe dudit mécanisme. Une excroissance 29 solidaire du levier 24 et s'étendant radialement est limitée par une surface 30 en forme d'escalier, ladite forme 30 étant destinée à coopérer par contact glissant sous faible charge avec l'extrémité hémisphérique d'une tige 31 appartenant à un capteur de position du levier 24 non représenté sur la figure 4.

Afin de limiter l'usure à des valeurs acceptables de l'encoche 26 coopérant par contact glissant avec l'extrémité du doigt d'actionnement 27, le rayon du profil de ladite extrémité, l'épaisseur de ladite extrémité, la rugosité de la surface du profil rayonné de ladite extrémité coopérant par contact glissant avec l'encoche 27, ainsi que l'épaisseur de l'encoche 26, sont dimensionnées de manière à limiter les pressions de Hertz maximales à des valeurs inférieures à 800 MPa avant apparition du phénomène d'usure, et de manière à stabiliser l'usure à des valeurs acceptables. A titre d'exemple non limitatif, pour une charge maximale de 1 000 N exercée perpendiculairement aux faces de l'encoche 26, on préfèrera un rayon de profil du doigt 27 compris entre 10 et 18 mm, une épaisseur minimale de l'encoche 26 de 5 mm, une rugosité de la surface du profil rayonné du doigt 27 inférieure à Ra = 3 µm, une épaisseur minimale de l'extrémité du doigt 27 de 5 mm.

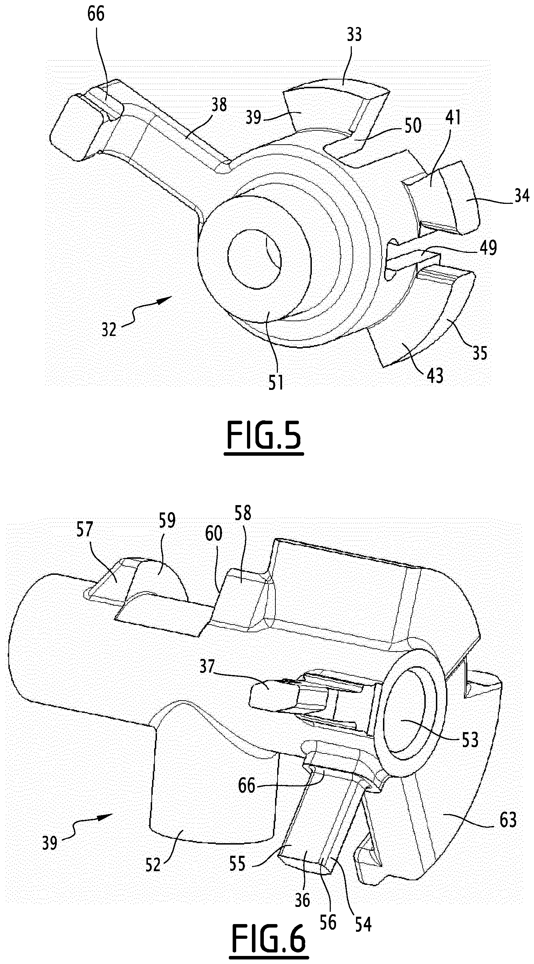

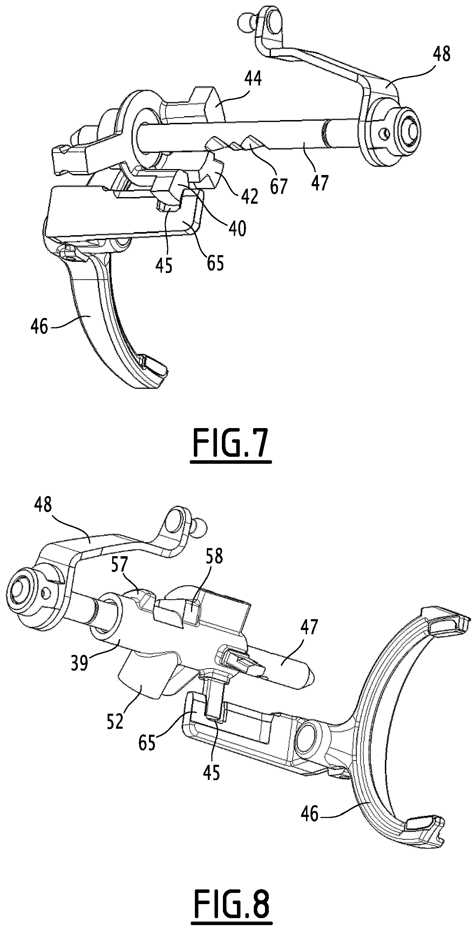

Un autre type d'élément de boîte de vitesses est une clef d'inter-verrouillage des modules de commande interne, telle que celle représentée sur les figures 5 et 7. Cette clef d'inter-verrouillage 32 est habituellement réalisée en cupro-aluminium CuAl10Fe5Ni5, ou en fonte GS, ou en acier. Elle comporte notamment des excroissances 33, 34, 35 appelées verrous, dont les faces latérales sensiblement parallèles 39, 40, ou 41, 42, ou 43, 44 peuvent coopérer avec l'encoche 45 d'un crabot 65 solidaire d'une fourchette 46 ou solidaire de l'axe sur lequel est fixée la fourchette 46. Ces verrous sont destinés à bloquer en translation les fourchettes pour lesquelles les verrous 33, 34, 35 sont positionnés à l'intérieur de l'encoche 45 des crabots 65 solidaires des fourchettes ou solidaires de leurs axes support. Ces verrous 33, 34, 35 sont des sécurités, et n'autorisent l'actionnement en passage de vitesse que pour une seule fourchette à la fois.

Les clefs d'inter-verrouillage 32 sont fixées rigidement sur un axe 47 installé à pivotement dans la boite de vitesses. Le mouvement de pivotement angulaire est assuré par un levier de sélection 48 fixé rigidement sur une extrémité de l'axe 47. Lorsque l'axe 47 est déplacé angulairement, les verrous 33, 34, 35 de la clef d'inter-verrouillage 32 se déplacent par rapport aux encoches 45 des crabots 65 solidaires des fourchettes ou solidaires des axes sur lesquels sont montées les fourchettes. On peut ainsi faire en sorte qu'aucun verrou ne fasse obstacle au déplacement en translation, selon un axe sensiblement parallèle à l'axe 47, de l'encoche 45 du crabot 65 solidaire de l'une des fourchettes ou solidaire de son axe support. Des rainures 49, 50 sont réalisées dans le corps de la clef d'inter-verrouillage 32. Ces rainures 49, 50 permettent de loger des pattes 36, 37 appartenant à un corps de doigt de commande 39 monté à coulissement sur l'axe 47 portant la clef d'inter-verrouillage 32 et situé entre ladite clef 32 et le levier de sélection 48. Ainsi, lors d'un mouvement de rotation de l'axe 47, dit mouvement de sélection, par l'intermédiaire du levier de sélection 48, la clef d'inter-verrouillage 32 solidaire de l'axe 47 est également entraînée dans le même mouvement de rotation, et les rainures 49, 50 entraînent en rotation le corps de doigt de commande 39 par l'intermédiaire des pattes 36, 37. Un appendice 38 coopère avec un ressort de torsion, non représenté sur la figure 5, dont l'un des deux brins est en appui sur l'une 66 de deux rainures réalisées sur l'extrémité de l'appendice 38, l'autre brin étant en appui sur une forme aménagée dans le carter de la boite de vitesses et vice et versa, selon le sens de pivotement de l'axe 47. La partie hélicoïdale de ce ressort se terminant par les deux brins est installée autour du corps sensiblement cylindrique 51 de la clef d'inter-verrouillage 32. Ce ressort de torsion a pour but d'aider à ramener vers une position angulairement neutre la clef d'inter-verrouillage 32 solidaire de l'axe 47.

Des problèmes de comportement en usure/matage des faces des excroissances 33, 34, 35 et de l'appendice 38 similaires à ceux précédemment décrits pour les fourchettes se posent également pour cette clef d'inter-verrouillage 32, et l'emploi des alliages précités y apporte également une solution satisfaisante. On divise au moins par deux le poids de la clef d'inter-verrouillage. A titre d'exemple, la clef 32 illustrée sur les figures pèse 240 g lorsqu'elle est réalisée en fonte ou en alliage cupro-aluminium, et elle ne pèse plus qu'environ 100 g lorsqu'elle est réalisée en un alliage d'aluminium.

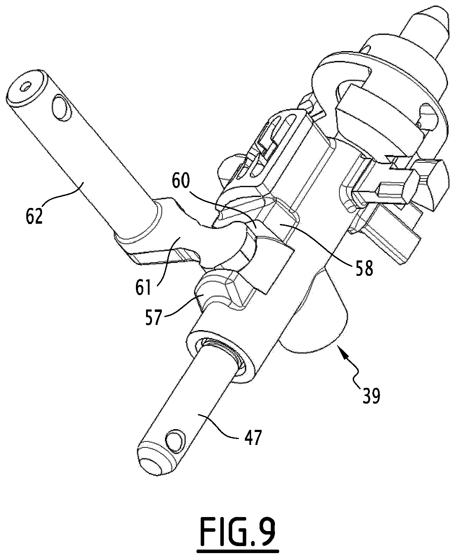

On décrit également également un corps de doigt de commande 39 tel que celui représenté sur les figures 6, 8 et 9 et qui est conçu pour coopérer avec la clef d'inter-verrouillage 32 de la figure 5. Son mode de fonctionnement dans la boite de vitesses est illustré par les figures 8 et 9. Il est installé à coulissement le long d'un axe 47. Un élément pivotant 62 appelé doigt de passage, généralement réalisé en acier, comporte une extension 61 à profil rayonné coopérant par contact glissant avec les faces 59, 60 parallèles entre elles aménagées sur des appendices 57, 58 du corps de doigt de commande 39. Lorsque le doigt de passage 62 est actionné en rotation, il entraine un mouvement de translation le long de l'axe 47 dudit corps 39.

Habituellement, le corps 39 est réalisé en fonte ou en acier, et afin de limiter l'usure des faces 59, 60 des appendices 57, 58 aménagés sur le corps 39, la dureté superficielle des faces 59, 60 est généralement augmentée par le biais de traitements thermiques additionnels comme une trempe, ou par le biais d'opérations de traitements de surface du corps 39 permettant de créer une couche superficielle à dureté élevée, d'au moins 50 HRC. Avantageusement, cela permet de se dispenser des opérations additionnelles de durcissement superficiel des faces 59, 60, compte tenu du niveau de résistance à l'usure de l'alliage d'aluminium constitutif du corps 39.

Un logement cylindrique 53 est réalisé dans le corps de doigt de commande 39 afin d'y emmancher deux bagues de glissement aux deux extrémités du logement cylindrique 53. Ces bagues de glissement coopèrent par contact glissant le long de l'axe 47 et permettent ainsi au corps de doigt de commande 39 de coulisser le long de l'axe 47 avec des pertes par frottement limitées.

Le doigt de commande 39 porte un appendice 52 dans lequel est usiné un alésage cylindrique orienté perpendiculairement à l'axe 47 débouchant dans l'alésage cylindrique 53, et dans lequel vient s'emmancher une cartouche de billage (non représentée) comportant à son extrémité une bille qui coopère avec un profil en forme de came 67 réalisé sur l'axe 47 portant les divers éléments qu'on a cités, le contact entre la bille et l'axe 47 étant réalisé par un ressort contenu dans la cartouche de billage.

Des pattes 36, 37 appartenant au corps de doigt de commande 39 et s'étendant radialement dans une direction perpendiculaire à l'axe du logement cylindrique 53 sont destinées non seulement à coopérer avec les gorges 49, 50 de la clef d'inter-verrouillage 32 par l'intermédiaire de leurs faces 55, mais également à coopérer avec les encoches des crabots 65 solidaires des fourchettes 46 ou solidaire des axes portant les fourchettes par l'intermédiaire de leurs faces 54 perpendiculaires aux faces 55. Des chanfreins 56 connectant lesdites faces 54, 55 facilitent l'introduction des pattes 36, 37 dans les encoches 45 desdits crabots 65. Les surfaces usinées 54, 55 et 56 délimitant la partie fonctionnelle de chaque patte 36 ou 37 se raccordent au corps 39 par des congés rayonnés 66 afin de limiter les concentrations de contraintes lorsque la patte 36, 37 est sollicitée par des efforts dits de passage de vitesse appliqués sur l'une des deux faces 54 de la patte 36, 37 coopérant avec un crabot 65. En général, et compte tenu des phénomènes de frottement sous charge avec lesdites encoches 45, les pattes 36, 37 sont durcies superficiellement grâce à des opérations additionnelles de traitements thermiques comme une trempe, ou grâce à des opérations de traitement de surface du corps 39 permettant de créer une couche superficielle à dureté élevée, d'au moins 50 HRC.

La géométrie des pattes 36, 37 et les rayons des congés 66 sont déterminés pour qu'en mode de fonctionnement normal de passage de vitesse, les contraintes maximales concentrées dans les congés de raccordement 66 ne dépassent pas 130 MPa. Pour des modes de fonctionnements particuliers dits exceptionnels, les contraintes ne doivent pas dépasser la limite élastique conventionnelle Rp₀,₂. Avantageusement, cela permet de se dispenser des opérations additionnelles de durcissement superficiel des pattes 37 et 38, compte tenu du niveau de résistance à l'usure de l'alliage d'aluminium constitutif du corps 39.

Comme on l'a dit, des faces 59, 60 sensiblement parallèles s'étendant radialement à partir de l'axe longitudinal du corps de doigt de commande 39 sont réalisées sur des appendices 57, 58 du corps 39. Les faces 59, 60 coopèrent par contact glissant avec les profils de contact rayonnés de l'extrémité 61 d'un doigt d'actionnement 62 monté à pivotement selon un axe perpendiculaire à l'axe 47 portant, notamment, le corps 39. Ainsi, le mouvement de pivotement du doigt d'actionnement 62 entraîne en translation le corps de doigt de commande 39 qui, par l'intermédiaire de l'une de ses pattes 36, 37 logée dans l'encoche 45 du crabot 65 solidaire d'une fourchette 46 sélectionnée, ou logée dans l'encoche du crabot solidaire de l'axe portant la fourchette sélectionnée, permet à ladite fourchette 46 de réaliser le passage d'une vitesse.

La surface extérieure d'un appendice 63 du corps de doigt de commande 39 est destinée coopérer par contact glissant sous faible charge avec l'extrémité hémisphérique d'une tige appartenant à un capteur de position (non représenté) du corps de doigt de commande 39. Avantageusement, cela permet de se dispenser des habituelles opérations additionnelles de durcissement superficiel de la surface de l'appendice 63, compte tenu du niveau de résistance à l'usure de l'alliage d'aluminium constitutif du corps 39.

Le poids d'un corps de doigt de commande 39 peut être réduit d'au moins 50 % par rapport à l'emploi des matériaux habituels. Dans l'exemple illustré, le gain en poids est estimé à 200 g.

## Revendications

1. Fourchette (11) de boîte de vitesses de véhicule soumise à des contraintes de flexion, de contact glissant, d'usure et de matage, comportant :
- un fût (2 ; 12) destiné à être traversé par l'axe sur lequel sera montée la fourchette (11),
- deux branches (4, 5 ; 14, 15) formant ensemble sensiblement un demi-cercle,
- une toile (6 ; 16) reliant le fût (2 ; 12) et les branches (4, 5 ; 14, 15),
- deux patins (7, 8 ; 17, 18) terminant chacun l'une des branches (4, 5 ; 14, 15) et destinés à coopérer avec un baladeur de la boîte de vitesses, et
- une crosse (21) s'étendant à partir du fût (12) et terminée par un crabot (22) destiné à venir en prise avec un doigt de commande de la boîte de vitesses,
**caractérisée en ce que** :
- la crosse (21) est intégrée, et
- la fourchette (11) est réalisée en un alliage d'aluminium-silicium hyper-eutectique dont la teneur en Si est comprise entre 16 et 27% en poids.

2. Fourchette (11) selon la revendication 1, **caractérisé en ce que** sa composition est choisie parmi, en pourcentages pondéraux :
- Si = 16-19%, Fe ≤ 1%, Cu = 4-5%, Mn ≤ 0,6%, Mg = 0,5-0,6%, Zn ≤ 0,2%, Ti ≤ 0,2%, le reste étant de l'Al et des impuretés résultant de l'élaboration ;
- Cu = 4-5% ; Mg = 0,45-0,65% ; Si = 16-18% ; Fe ≤ 1,3% ; Zn ≤ 1,5% ; Ni ≤ 0,10% : Mn ≤ 0,60% ; Ti ≤ 0,2%, le reste étant de l'Al et des impuretés résultant de l'élaboration
- Si = 17-19%, Fe ≤ 1%, Cu = 0,8-1,5%, Mn ≤ 0,2%, Mg = 0,8-1,3%, Ni = 0,8-1,3%, Zn ≤ 0,3%, Ti ≤ 0,2%, le reste étant de l'Al et des impuretés résultant de l'élaboration ;
- Si = 23-26%, Fe ≤ 1%, Cu = 0,8-1,5%, Mn ≤ 0,2%, Mg = 0,8-1,3%, Ni = 0,8-1,3%, Zn ≤ 0,2%, Ti ≤ 0,2%, Cr ≤ 0,6%, le reste étant de l'Al et des impuretés résultant de l'élaboration.

3. Fourchette (11) selon la revendication 1 ou 2, **caractérisée en ce qu'**elle comporte également un patin central (9 ; 19) formant une surépaisseur sur le bord inférieur (10 ; 20) de la toile (6 ; 16).

4. Procédé de fabrication d'une fourchette (11) de boîte de vitesses selon l'une quelconque des revendications 1 à 3, **caractérisé en ce qu'**il comporte une étape de moulage par gravité dudit alliage d'Al-Si à l'état liquide dans un moule à empreintes.

5. Procédé de fabrication d'une fourchette (11) de boîte de vitesses selon l'une quelconque des revendications 1 à 3, **caractérisé en ce qu'**il comporte une étape de moulage par injection sous pression dudit alliage d'Al à l'état liquide dans un moule à empreintes.

6. Procédé de fabrication d'une fourchette (11) de boîte de vitesses selon l'une quelconque des revendications 1 à 3, **caractérisé en ce que** ladite fourchette (1 ; 11) est réalisée par usinage.

7. Procédé selon l'une des revendications 4 à 6, **caractérisé en ce qu'**il comporte également un traitement thermique de la pièce moulée ou usinée.

8. Boîte de vitesses de véhicule comportant des éléments soumis à des contraintes de flexion, de contact glissant, d'usure et de matage, **caractérisée en ce qu'**au moins l'un desdits éléments est une fourchette (111) telle que décrite par l'une quelconque des revendications 1 à 3.

## Patentansprüche

1. Schaltgabel (11) eines Fahrzeuggetriebes, die Biege-, Gleitkontakt-, Verschleiß- und Verstemmungsbelastungen unterliegt, umfassend:
- einen Zylinder (2; 12), durch den die Achse gehen soll, an der die Schaltgabel (11) montiert wird,
- zwei Schenkel (4, 5; 14, 15), die zusammen im Wesentlichen einen Halbkreis bilden,
- einen Steg (6; 16), der den Zylinder (2; 12) und die Schenkel (4, 5; 14, 15) verbindet,
- zwei Gleitschuhe (7, 8; 17, 18), die jeweils einen der Schenkel (4, 5; 14, 15) beenden und dazu gedacht sind, mit einem Schieberad des Getriebes zusammenzuwirken, und
- einen Kreuzkopf (21), der sich von dem Zylinder (12) aus erstreckt und in einer Klaue (22) endet, die dazu gedacht ist, um einen Steuerzapfen des Getriebes in Eingriff zu bringen,
**dadurch gekennzeichnet, dass**:
- der Kreuzkopf (21) einstückig ist, und
- die Schaltgabel (11) aus einer hypereutektischen Aluminium-Silizium-Legierung besteht, deren Si-Gehalt zwischen 16 und 27 Gewichtsprozent liegt.

2. Schaltgabel (11) nach Anspruch 1, **dadurch gekennzeichnet, dass** ihre Zusammensetzung in Gewichtsprozent gewählt wird aus:
- Si = 16 bis 19 %, Fe ≤ 1 %, Cu = 4 bis 5 %, Mn ≤ 0,6 %, Mg = 0,5 bis 0,6 %, Zn ≤ 0,2 %, Ti ≤ 0,2 %, wobei der Rest aus AI und sich aus der Verarbeitung ergebenden Verunreinigungen besteht;
- Cu = 4 bis 5 %; Mg = 0,45 bis 0,65 %; Si = 16 bis 18 %; Fe ≤ 1,3 %; Zn ≤ 1,5 %; Ni ≤ 0,10 %; Mn ≤ 0,60 %; Ti ≤ 0,2 %, wobei der Rest aus AI und sich aus der Verarbeitung ergebenden Verunreinigungen besteht;
- Si = 17 bis 19 %, Fe ≤ 1 %, Cu = 0,8 bis 1,5 %, Mn ≤ 0,2 %, Mg = 0,8 bis 1,3 %, Ni = 0,8 bis 1,3 %, Zn ≤ 0,3 %, Ti ≤ 0,2 %, wobei der Rest aus AI und sich aus der Verarbeitung ergebenden Verunreinigungen besteht;
- Si = 23 bis 26 %, Fe ≤ 1 %, Cu = 0,8 bis 1,5 %, Mn ≤ 0,2 %, Mg = 0,8 bis 1,3 %, Ni = 0,8 bis 1,3 %, Zn ≤ 0,2 %, Ti ≤ 0,2 %, Cr ≤ 0,6 %, wobei der Rest aus AI und sich aus der Verarbeitung ergebenden Verunreinigungen besteht.

3. Schaltgabel (11) nach Anspruch 1 oder 2, **dadurch gekennzeichnet, dass** sie auch einen mittleren Gleitschuh (9; 19) umfasst, der an der unteren Kante (10; 20) des Steges (6; 16) eine Überdicke bildet.

4. Verfahren zum Herstellen einer Getriebeschaltgabel (11) nach einem der Ansprüche 1 bis 3, **dadurch gekennzeichnet, dass** es einen Schritt des Schwerkraftgießens der Al-Si-Legierung im flüssigen Zustand in einem Schieberwerkzeug umfasst.

5. Verfahren zum Herstellen einer Getriebeschaltgabel (11) nach einem der Ansprüche 1 bis 3, **dadurch gekennzeichnet, dass** es einen Schritt des Druckgießens der Al-Legierung im flüssigen Zustand in einem Schieberwerkzeug umfasst.

6. Verfahren zum Herstellen einer Getriebeschaltgabel (11) nach einem der Ansprüche 1 bis 3, **dadurch gekennzeichnet, dass** die Schaltgabel (1; 11) durch Bearbeitung hergestellt wird.

7. Verfahren nach einem der Ansprüche 4 bis 6, **dadurch gekennzeichnet, dass** es auch eine Wärmebehandlung des geformten oder bearbeiteten Teils umfasst.

8. Fahrzeuggetriebe mit Elementen, die Biege-, Gleitkontakt-, Verschleiß- und Verstemmungsbelastungen unterliegen, **dadurch gekennzeichnet, dass** mindestens eines der Elemente eine Schaltgabel (111) nach einem der Ansprüche 1 bis 3 ist.

## Claims

1. A shift fork (11) of a vehicle gearbox undergoing bending, sliding contact, wear, and caulking stresses, comprising:
- a shank (2; 12) designed to be traversed by the shaft on which the shift fork (11) will be mounted,
- two branches (4, 5; 14, 15) together substantially forming a semicircle,
- a web (6; 16) connecting the barrel (2; 12) and the branches (4, 5; 14, 15),
- two shoes (7, 8; 17, 18) each terminating one of the branches (4, 5; 14, 15) and designed to co-operate with a sliding gear of the gearbox, and
- a crosshead (21) extending from the shank (12) and terminated by a sliding sleeve (22) designed to engage a shift finger of the gearbox,
**characterized in that**:
- the crosshead (21) is integral, and
- the shift fork (11) is made of a hypereutectic aluminum-silicon alloy the Si content of which is between 16 and 27 weight percent.

2. The shift fork (11) according to claim 1, **characterized in that** the composition thereof in weight percent is selected from:
- Si = 16 to 19 %, Fe ≤ 1 %, Cu = 4 to 5 %, Mn ≤ 0.6 %, Mg = 0.5 to 0.6 %, Zn ≤ 0.2 %, Ti ≤ 0.2 %, the remainder being Al and impurities resulting from processing;
- Cu = 4 to 5 %; Mg = 0.45 to 0.65 %; Si = 16 to 18 %; Fe ≤ 1.3 %; Zn ≤ 1.5 %; Ni ≤ 0.10 %; Mn ≤ 0.60 %; Ti ≤ 0.2 %, the remainder being Al and impurities resulting from processing;
- Si = 17 to 19 %, Fe ≤ 1 %, Cu = 0.8 to 1.5 %, Mn ≤ 0.2 %, Mg = 0.8 to 1.3 %, Ni = 0.8 to 1.3 %, Zn ≤ 0.3 %, Ti ≤ 0.2 %, the remainder being Al and impurities resulting from processing;
- Si = 23 to 26 %, Fe ≤ 1 %, Cu = 0.8 to 1.5 %, Mn ≤ 0.2 %, Mg = 0.8 to 1.3 %, Ni = 0.8 to 1.3 %, Zn ≤ 0.2 %, Ti ≤ 0.2 %, Cr ≤ 0.6 %, the remainder being Al and impurities resulting from processing.

3. The shift fork (11) according to claim 1 or 2, **characterized in** also comprising a center shoe (9; 19) forming an oversize at the lower edge (10; 20) of the web (6; 16).

4. A method for producing a gearbox shift fork (11) according to any of claims 1 to 3, **characterized in** comprising a step of gravity casting of said Al-Si alloy in a liquid state inside a cavity mold.

5. The method for producing a gearbox shift fork (11) according to any of claims 1 to 3, **characterized in** comprising a step of pressure injection molding said Al alloy in a liquid state inside a cavity mold.

6. The method for producing a gearbox shift fork (11) according to any of claims 1 to 3, **characterized in that** said shift fork (1; 11) is made by machining.

7. The method according to any of claims 4 to 6, **characterized in** also comprising heat treatment of the molded or machined part.

8. A vehicle gearbox including members undergoing bending, sliding contact, wear, and caulking stresses, **characterized in that** at least one of said members is a shift fork (111) according to any of claims 1 to 3.
